# EUROPEAN PATENT SPECIFICATION

(11) **EP 2 759 480 B1**
(45) Date of publication and mention of the grant of the patent: **05.06.2019**
(21) Application number: 11872105.9
(22) Date of filing: 15.09.2011
(51) Int. Cl.: B64D 47/08, F16M 11/12

(54) **DUAL-AXIS BALL HEAD FOR USE IN SMALL UNMANNED AERIAL VEHICLE AND TRIPLE-AXIS BALL HEAD FOR USE IN SMALL UNMANNED AERIAL VEHICLE**
ZWEIACHSIGER KUGELKOPF ZUR VERWENDUNG IN KLEINEN UNBEMANNTEN FLUGKÖRPERN SOWIE DREIACHSIGER KUGELKOPF ZUR VERWENDUNG IN KLEINEN UNBEMANNTEN FLUGKÖRPERN
TETE A ROTULE A DEUX AXES POUR UTILISATION DANS UN PETIT AERONEF SANS PILOTE ET TETE A ROTULE A TROIS AXES POUR UTILISATION DANS UN PETIT AERONEF SANS PILOTE

(30) Priority: 09.09.2011 CN 201110268339
(43) Date of publication of application: 30.07.2014
(60) Divisional application: 19169577.4
(73) Proprietor: SZ DJI Osmo Technology Co., Ltd., Nanshan District, Shenzhen, Guangdong 518057 (CN)
(72) Inventor: WANG, Tao, Shenzhen Guangdong 518057 (CN)
(74) Representative: Goddar, Heinz J.
(86) International application number: PCT/CN2011/079704
(87) International publication number: WO 2013/033925

(56) References cited:
- WO-A2-2004/067432
- CN-A- 101 093 733
- CN-A- 101 734 377
- CN-U- 201 604 796
- CN-Y- 201 287 830
- DE-A1-102008 039 468
- GB-A- 2 375 173
- JP-A- 2004 242 128
- JP-A- 2009 023 379
- US-A- 5 900 925

## Description

### Field of the Invention

The present invention relates to the field of unmanned aerial vehicles, and particularly to a tri-axis platform for use in a small unmanned aerial vehicle for purpose of aerial photography or surveillance.

### Background of the Invention

An unmanned aerial vehicle is characterized by its small size, light weight, low costs, flexible operation and high safety, and may be extensively applied to fields such as aerial photography, surveillance, search and rescue, and resource exploration. Since the unmanned aerial vehicle itself suffers from high frequency vibration and low frequency jitter, it needs to be equipped with an aerial photography stabilizing platform to carry a video camera or camera to achieve stable shooting. Aerial photography stabilizing platforms mostly detect posture changes of the video camera or camera via an electronic apparatus and control reverse compensation of a steering engine to achieve stabilization of the video camera or camera. In the prior art, most of platforms employ mechanical gear driving to achieve dual-axis, tri-axis or multi-axis rotation of the video camera or camera. Since there is always a lag in gear transmission, when the unmanned aerial vehicle is in various postures such as turning, hovering, rising, falling or tilting, the response time of the platform is long and the adjustment of the steering engine is slow, so that it is very difficult for the video camera or camera to adjust its angle timely to adapt for adjustment of postures of the unmanned aerial vehicle, therefore causing the image quality of the video camera or camera to be affected. Meanwhile, a gear transmission platform does not have high flexibility, cannot perform indefinitely variable adjustment so that the adjustment precision is not high, and cannot eliminate the influence due to low frequency shake or airframe tilt, therefore makes it very difficult to shoot high quality images and meet professional needs.

WO 2004/067432 describes methods and apparatuses for stabilizing payloads, including airborne cameras.

US 5900925 describes a computer operated man assisted motion generation system for use with a camera in cinematography.

CN 201604796 describes an unmanned aerial vehicle.

DE 10 2008 039468 describes a device and a method for the stabilization of the position of cameras, and for the production of film recordings from unmanned airborne objects. DE10208413 describes a camera support.

### Summary of the Invention

The present invention relates to a platform as defined by independent claim 1. Preferred embodiments are described in the dependent claims. The platform is for use in an unmanned aerial vehicle, comprising a machine frame assembly, and a transmission assembly, wherein:
the machine frame assembly comprises a first bracket, a second bracket a third bracket and a connecting frame, wherein the first bracket is configured to support a shooting assembly affixed thereto, and wherein the first bracket is rotatably arranged with the second bracket, the second bracket is rotatably arranged with the third bracket, and the third bracket is rotatably arranged with the connecting frame;
the transmission assembly comprises a first motor, a second motor, and a third motor, wherein the first motor directly drives the first bracket to rotate relative to the second bracket, the second motor directly drives the second bracket to rotate relative to the third bracket, and the third motor directly drives the third bracket to rotate relative to the connecting frame wherein,
   (a) the center of gravity of the first bracket, the second bracket and the shooting assembly as a whole falls on the rotation axis Y of the second bracket, or
   (b) the center of gravity of the first bracket, the second bracket, the third bracket and the shooting assembly as a whole falls on a rotation axis Z of the third bracket,
wherein the connecting frame includes two U-shaped frames that are fixedly connected by a positioning block.

The present invention may provide a platform for use in a small unmanned aerial vehicle to solve a technical problem that a platform for use in a small unmanned aerial vehicle in the prior art has a long response time due to use of gear transmission, cannot timely adapt for various flying postures of the unmanned aerial vehicle, and cannot perform indefinitely variable adjustment so that the adjustment precision is not high.

The present invention may achieve the following advantages: transformation of the shooting assembly at a rise angle or bow angle in a vertical plane is achieved through the rotation of the first bracket relative to the second bracket, rotation of the shooting assembly itself is achieved through leftward tilt rotation or right tilt rotation of the second bracket relative to the third bracket, circumferential shooting of the shooting assembly is achieved through circumferential rotation of the third bracket; the motors, as a motive power, are employed to directly connect to the machine frame assembly of the platform, thereby consuming less energy and saving electrical power; meanwhile, motor driving is capable of achieving indefinitely variable adjustment, so that the motors have a short response time and are capable of starting and stopping quickly, or adjusting the magnitude of the rotation speed in a timely manner to adapt for various flying postures of the unmanned aerial vehicle and thereby improving the shooting stability of the shooting assembly.

### Brief Description of Drawings

The present invention will be further described with reference to examples, embodiments and figures, in which:
Fig.1 is an exploded structure diagram of a dual-axis platform for use in a small unmanned aerial vehicle as provided by Example 1;
Fig.2 is an exploded structure diagram of a tri-axis platform for use in a small unmanned aerial vehicle as provided by Embodiment 2 of the present invention;
Fig.3 is assembly structure diagram 1 of the tri-axis platform for use in a small unmanned aerial vehicle as provided by Embodiment 2 of the present invention;
Fig.4 is assembly structure diagram 2 of the tri-axis platform for use in a small unmanned aerial vehicle as provided by Embodiment 2 of the present invention;
Fig.5 is an exploded structure diagram of the tri-axis platform for use in a small unmanned aerial vehicle as provided by Embodiment 2 of the present invention being mounted to a multi-rotor mounting frame;
Fig.6 is assembly structure diagram 1 of the tri-axis platform for use in a small unmanned aerial vehicle as provided by Embodiment 2 of the present invention being mounted to a multi-rotor mounting frame;
Fig.7 is assembly structure diagram 2 of the tri-axis platform for use in a small unmanned aerial vehicle as provided by Embodiment 2 of the present invention being mounted to a multi-rotor mounting frame.

**Description of Reference Numerals:**

| | |
|---|---|
| 100 platform | 200 multi-rotor mounting frame |
| 1 shooting assembly | 2 first bracket |
| 3 first motor | 4 second bracket |
| 5 second motor | 6 third bracket |
| 7 third motor | 8 connecting frame |
| 9 positioning block | 10 sleeve |
| 11 connecting block | 21 base |
| 22 support arm | 23 rotor member |
| 24 support frame | |

### Detailed Description of Examples and Preferred Embodiments

Specific examples and embodiments of the present invention will be described in detail with reference to figures for a clearer understanding of the technical features, objects and effects of the present invention.

### Example 1

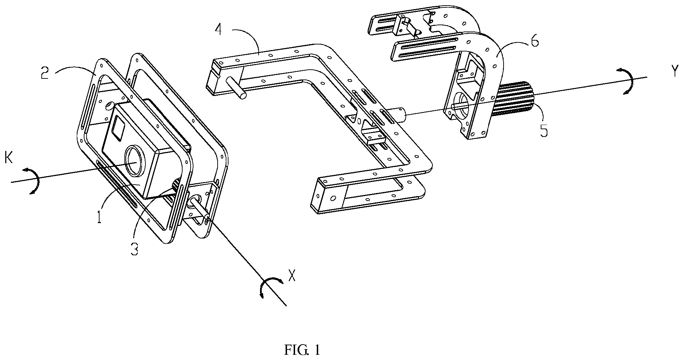

As shown in Fig.1, an illustrative example 1 not being an embodiment of the claimed invention provides a dual-axis platform for use in an unmanned aerial vehicle, comprising specifically a machine frame assembly, a transmission assembly and a shooting assembly 1. The machine frame assembly comprises a first bracket 2 and a second bracket 4, the shooting assembly 1 is fixed on the first bracket 2. Here, the shape of the shooting assembly 1 is not limited to square as shown in Fig.1, and may also be circular or in other shapes as commonly seen in the market. In order to achieve rotation of the shooting assembly 1 along X axis (namely, the rotation axis of the first bracket 2), the first bracket 2 is rotatably arranged on the second bracket 4 through a pin shaft at an end. Such rotational structure can achieve rise or bow rotation of the shooting assembly 1. In order to adapt for left tilt or right tilt flight of the unmanned aerial vehicle during flying, the shooting assembly 1 performs right tilt or left tilt rotation correspondingly to ensure stability of photo taking or video shooting. As shown in Fig.1, the second bracket 4 is rotatable about its own rotation axis Y, and the second bracket 4 rotates to the left or the right a certain angle to thereby bring the first bracket 2 and the shooting assembly 1 as a whole into rotation. In order to drive the first bracket 2 and the second bracket 4, the present example provides motors as power source. Use of a small-sized motor for direct driving has the following advantages: (1) the motor drives directly with less power consumption, thereby saves energy and protects the environment; (2) the motor has a short response time and is capable of making quick and timely adjustment to adapt for various flying postures of the unmanned aerial vehicle so as to improve shooting stability of the shooting assembly; (3) the motor can achieve indefinitely variable adjustment and uniform speed change, is capable of adjusting the magnitude of the speed continuously and arbitrarily in a permissible speed range, exerts less impact on parts of mechanisms, and has good stability. Specifically, as shown in Fig.1, the transmission assembly comprises a first motor 3 and a second motor 5, wherein the first motor 3 directly drives the first bracket 2 to rotate about its rotation axis (namely, X axis) relative to the second bracket 4, and the second motor 5 directly drives the second bracket 4 to rotate about its rotation axis (namely, Y axis). The present example employs the motors, as a motive power, to directly connect to the machine frame assembly of the platform, thereby consuming less energy and saving electrical power; meanwhile, motor driving can achieve indefinitely variable adjustment, so that the motors have a short action response time and are capable of starting and stopping quickly, or adjusting the magnitude of the rotation speed in a timely manner to adapt for various flying postures of the unmanned aerial vehicles and thereby improving shooting stability of the shooting assembly.

In order to facilitate the motors to make timely adjustment to the rotation angles, preferably the rotation axis X of the first bracket 2 is arranged perpendicular to the rotation axis Y of the second bracket 4.

Specifically, as shown in Fig.1, a stator of the first motor 3 is fixed on the first bracket 2, and a rotor of the first motor 3 is fixedly arranged with the second bracket 4. The first motor 3 directly drives the second bracket 4 to bring the first bracket 2 into rotation relative to the second bracket 4. It should be noted here that the stator and rotor of the third motor 3 are interchangeable in position, namely, the rotor of the first motor 3 is fixed on the first bracket 2 and the stator is fixedly arranged with the second bracket 4, which can also achieve the function of relative rotation.

Preferably, as shown in Fig.1, a stator of the second motor 5 is fixed on a third bracket 6, and a rotor of the second motor 5 is fixedly arranged with the second bracket 4. The second motor 5 directly drives the second bracket 4 to bring the second bracket 4 into rotation relative to the third bracket 6. It should be noted here that the stator and rotor of the second motor 5 are interchangeable in position, namely, the rotor of the second motor 5 is fixed on the third bracket 6 and the stator is fixedly arranged with the second bracket 4, which can also achieve the function of relative rotation.

During the flight of the unmanned aerial vehicle, when a central axis of a lens of the shooting assembly 1 rotates to a position perpendicular to a plane constituted by the X axis and Y axis, leftward or rightward rotation of the second bracket 4 about the Y axis can only drive the lens of the shooting assembly 1 to sweep within a certain range of the perpendicular plane and cannot achieve self-rotation of the lens of the shooting assembly 1. In order to allow for omni-directional adjustment of the angle of the lens when the lens rotates to be perpendicular to the plane constituted by the X axis and Y axis, on the basis of the above technical solution, as a preferred example, the transmission assembly comprises a fourth motor which drives the shooting assembly 1 to rotate about its own rotation axis K. When the K axis is parallel to or coaxial with the Y axis, the rotation of the second bracket 4 about the Y axis can achieve self-rotation of the lens of the shooting assembly 1; when the K axis is perpendicular to the Y axis, the lens of the shooting assembly 1 achieves self-rotation via the fourth motor.

Furthermore, to increase stability during the shooting of the shooting assembly 1, the center of gravity of the first bracket 2 and the shooting assembly 1 falls on the rotation axis of the first bracket 2. It is found through mechanical analysis that, when the center of gravity of the first bracket 2 and the shooting assembly 1 falls on the rotation axis X of the first bracket 2, the first bracket 2 does not generate a rotational torque at any angle it is rotated to, i.e., the first bracket 2 will not shake to and fro due to the torque and therefore stability of the shooting assembly 1 during rotation is increased. When the unmanned aerial vehicle operates stably, namely, when motor driving is not needed, the first bracket 2 and the shooting assembly 1 are also in a dynamically balanced state.

Likewise, it is found through mechanical analysis that, in order to increase stability and prevent the whole assembly rotating about the Y axis from generating the rotational torque, preferably the center of gravity of the first bracket 2, the second bracket 4 and the shooting assembly 1 as a whole falls on the rotation axis of the second bracket 4, as shown in Fig.1.

On the basis of the above technical solution, preferably, the platform provided by the present example is adapted for a small unmanned aerial vehicle for aerial photography and surveillance, and the first motor 3, the second motor 5 and the fourth motor are preferably DC brushless motors. Advantages of using DC brushless motors in the platform for use in an unmanned aerial vehicle lie in that: (1) electronic commutation, in place of conventional mechanical commutation, achieves reliable performance, permanent wear resistance, low malfunction rate and an increased service life about six times longer than a brush motor; (2) the DC brushless motor is a static motor with a small no-load current; (3) high efficiency; (4) small size.

Furthermore, the transmission assembly further comprises an inertia sensor, a microprocessor and a signal line, wherein the inertia sensor comprises a gyroscope for detecting an angular speed signal and an accelerometer for detecting an acceleration signal, the microprocessor controls start, stop and the magnitude of rotation speed of the first motor 3 and the second motor 5 according to the angular speed signal and the acceleration signal. The postures of the unmanned aerial vehicle are monitored timely and dynamically by providing the inertia sensor, and the start and stop of the motors are quickly and timely controlled so as to improve the shooting stability of the shooting assembly.

On the basis of the above technical solution, the dual-axis platform for use in an unmanned aerial vehicle may be subjected to structural improvement to achieve rotation in any other two directions. The improved platform for use in a small unmanned aerial vehicle is a dual-axis platform which specifically comprises a machine frame assembly, a transmission assembly and a shooting assembly 1. The machine frame assembly comprises a first bracket 2, a third bracket 6, and a connecting frame 8. The shooting assembly 1 is fixed on the first bracket 2, and the first bracket 2 is rotatably arranged with the third bracket 6. Such rotational structure can achieve rise or bow rotation of the shooting assembly 1. The connecting frame 8 is fixed externally to a helicopter or a multi-rotor aerial vehicle, and the third bracket 6 is circumferentially rotatable relative to the connecting frame 8, thereby bringing the platform as a whole into circumferential rotation. In order to drive the first bracket 2 and the third bracket 6, a power source provided by the present example is a motor. Use of a small-sized motor for direct driving has the following advantages: (1) the motor drives directly with less power consumption, thereby saves energy and protects the environment; (2) the motor has a short response time and is capable of making quick and timely adjustment to adapt for various flying postures of the unmanned aerial vehicle so as to improve shooting stability of the shooting assembly; (3) the motor can achieve indefinitely variable adjustment and uniform speed change, is capable of adjusting the magnitude of the speed continuously and arbitrarily in a permissible speed range, exerts less impact on parts of mechanisms, and has good stability. Specifically, the transmission assembly comprises a first motor 3 and a third motor 7, wherein the first motor 3 directly drives the first bracket 2 to rotate about its rotation axis (namely, X axis) and thereby bringing the lens of the shooting assembly 1 into rise and bow rotation; the third motor 7 directly drives the third bracket 6 to circumferentially rotate about its rotation axis (namely, Z axis), thereby driving the shooting assembly 1 to perform circumferential shooting about the Z axis.

Likewise, the dual-axis platform for use in an unmanned aerial vehicle may also be subjected to structural improvement in order to simultaneously achieve leftward or rightward tilt and circumferential rotation of the shooting assembly 1. The improved platform specifically comprises a machine frame assembly, a transmission assembly and a shooting assembly 1. The machine frame assembly comprises a second bracket 4 and a third bracket 6. The shooting assembly 1 is fixed on the second bracket 4, and the second bracket 4 is rotatable about the rotation axis Y a certain angle. Rotation of the second bracket 4 drives the shooting assembly 1 to tilt to the left or right. The third bracket 6 is circumferentially rotatable about its rotation axis (namely, Z axis) to thereby drive the shooting assembly 1 to sweep and shoot circumferentially. The transmission assembly comprises a second motor 5 and a third assembly 7, wherein the second motor 5 directly drives the second bracket 4 to rotate a certain angle about its rotation axis (namely, Y axis) relative to the third bracket 6, and the third motor 7 directly drives the third bracket 6 to circumferentially rotate about its rotation axis (namely, Z axis). Preferably, the rotation axis Y of the second bracket 4 is arranged perpendicular to the rotation axis Z of the third bracket 6. The machine frame assembly further comprises a connecting frame 8, and the third bracket 6 is rotatably arranged on the connecting frame 8. Specifically, a stator of the third motor 7 is fixed on the connecting frame 8, and a rotor thereof is fixedly connected to the third bracket 6.

In the above example, the stator and rotor of each of the first motor 3, the second motor 5 and the third motor 7 are interchangeable in position, which may also achieve the purpose of rotation.

### Embodiment 2

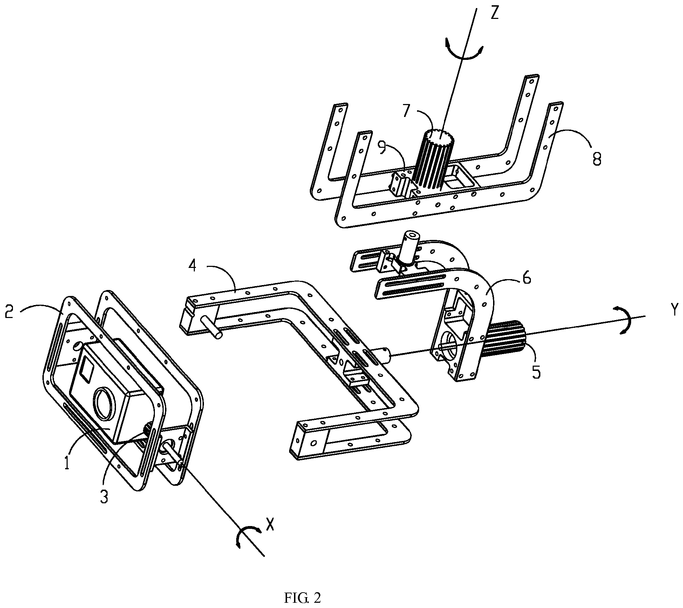

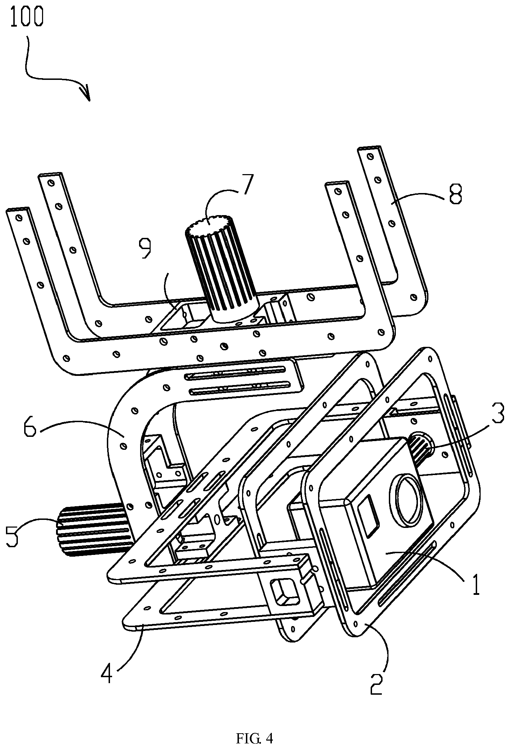

In a preferred embodiment of the claimed invention as shown in Figs.2, 3 and 4, the present invention provides a platform 100 for use in an unmanned aerial vehicle. Such platform 100 is a platform capable of tri-axial rotation, and specifically comprises a machine frame assembly, a transmission assembly and a shooting assembly 1. As shown in Fig.2, the machine frame assembly comprises a first bracket 2, a second bracket 4, a third bracket 6 and a connecting frame 8. The shooting assembly 1 is fixed on the first bracket 2. To achieve rotation of the shooting assembly 1 along X axis (namely, the rotation axis of the first bracket 2), the first bracket 2 is rotatably arranged with the second bracket 4. Such rotational structure can achieve rise or bow rotation of the shooting assembly 1. In order to adapt for left tilt or right tile flying of the unmanned aerial vehicle during flight, the shooting assembly 1 rotates to the right or to the left correspondingly to ensure stability of photo taking or video shooting. As shown in Fig.2, the second bracket 4 is rotatably arranged with the third bracket 6, and the second bracket 4 rotates to the left or the right to thereby bring the first bracket 2 and the shooting assembly 1 as a whole into rotation. To allow for circumferential rotation of the shooting assembly 1 to perform rotatable shooting in a range of 360 degrees, the connecting frame 8 is fixed externally to a helicopter or a multi-rotor aerial vehicle, and the third bracket 6 may rotate about a Z axis relative to the connecting frame 8. In order to drive the first bracket 2, the second bracket 4 and the third bracket 6, a power source provided by the present embodiment is a motor. Use of a small-sized motor for direct driving has the following advantages: (1) the motor drives directly with less power consumption, thereby saves energy and protects the environment; (2) the motor has a short response time and is capable of making quick and timely adjustment to adapt for various flying postures of the unmanned aerial vehicle so as to improve shooting stability of the shooting assembly; (3) the motor can achieve indefinitely variable adjustment and uniform speed change, is capable of adjusting the magnitude of the speed continuously and arbitrarily in a permissible speed range, exerts less impact on parts of mechanisms, and has good stability. Specifically, as shown in Figs.2, 3 and 4, the transmission assembly comprises a first motor 3, a second motor 5 and a third motor 7, wherein the first motor 3 directly drives the first bracket 2 to rotate about its rotation axis X relative to the second bracket 4, the second motor 5 directly drives the second bracket 4 to rotate about its rotation axis Y relative to the third bracket 6, and third motor 7 directly drives the third bracket 6 to circumferentially rotate about the Z axis. The present embodiment employs the motors, as a motive power, to directly connect to the machine frame assembly of the platform, thereby consuming less energy and saving electrical power; meanwhile, motor driving can achieve indefinitely variable adjustment, so that the motors have a short action response time and are capable of starting and stopping quickly, or adjusting the magnitude of the rotation speed in a timely manner to adapt for various flying postures of the unmanned aerial vehicles and thereby improving shooting stability of the shooting assembly.

Preferably, the rotation axis X of the first bracket 2, the rotation axis Y of the second bracket 4 and the rotation axis Z of the third bracket 6 are arranged perpendicular to one another.

Specifically, as shown in Fig.2, a stator of the third motor 7 is fixed on a landing gear 8, and a rotor thereof is fixed on the third bracket 6. More specifically, two U-shaped connecting frames 8 are fixedly connected by a positioning block 9, and the stator of the third motor 7 is fixed on the positioning block 9 via a bolt or a screw. A connecting block 11 is fixedly provided on the third bracket 6, and a sleeve 10 with a built-in through-hole is fixed on the connecting block 11. The through-hole on the sleeve 10 matches with the rotor of the third motor 7, and the rotor is inserted into the through-hole and is interference fitted with the through-hole. It may be understood that the stator and rotor are interchangeable in position, which may also achieve the purpose of rotation.

On the basis of the above technical solution, to increase stability of the shooting assembly 1 during shooting, the center of gravity of the first bracket 2 and the shooting assembly 1 falls on the rotation axis X of the first bracket 2. It is found through mechanical analysis that, when the center of gravity of the first bracket 2 and the shooting assembly 1 falls on the rotation axis X of the first bracket 2, the first bracket 2 does not generate a rotational torque at any angle it is rotated to, i.e., the first bracket 2 will not shake to and fro due to the torque and thereby stability of the shooting assembly 1 during rotation is increased. When the unmanned aerial vehicle operates stably, i.e., when motor driving is not needed, the first bracket 2 and the shooting assembly 1 are also in a dynamically balanced state.

Likewise, in order to increase stability and prevent the whole assembly rotating about the Y axis from generating the rotational torque, preferably the center of gravity of the first bracket 2, the second bracket 4 and the shooting assembly 1 as a whole falls on the rotation axis of the second bracket 4, as shown in Fig.1.

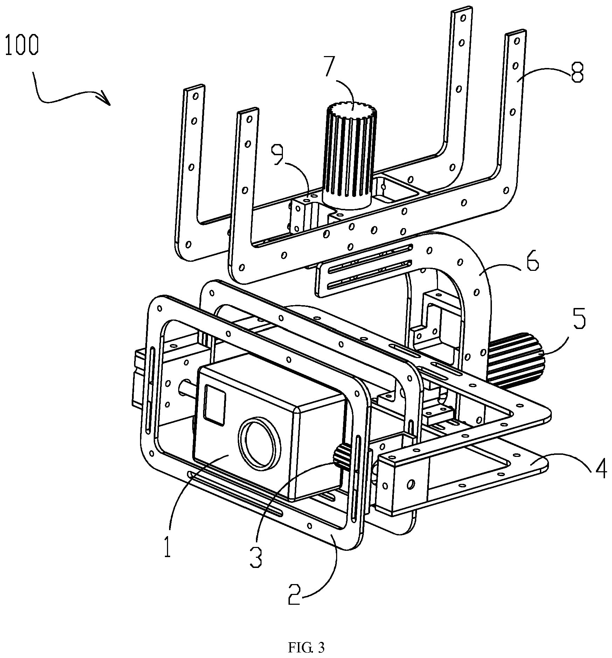

Likewise, in order to prevent the whole assembly rotating about the Z axis from generating the rotational torque, the center of gravity of the first bracket 2, the second bracket 4, the third bracket 6 and the shooting assembly 1 as a whole falls on the rotation axis Z of the third bracket 6, as shown in Fig.2 and Fig.3.

Preferably, the first motor 3, the second motor 5, the third motor 7 and the fourth motor are each a DC brushless motor. Advantages of using DC brushless motors in the platform 100 for use in an unmanned aerial vehicle lie in that: (1) electronic commutation, in place of conventional mechanical commutation, achieves reliable performance, permanent wear resistance, low malfunction rate and an increased service life about six times longer than a brush motor; (2) the DC brushless motor is a static motor with a small no-load current; (3) high efficiency; (4) small size.

Furthermore, the transmission assembly further comprises an inertia sensor, a microprocessor and a signal line, wherein the inertia sensor comprises a gyroscope for detecting an angular speed signal and an accelerometer for detecting an acceleration signal, the microprocessor controls start, stop and the magnitude of rotation speed of the first motor 3 and the second motor 5 according to the angular speed signal and the acceleration signal. The postures of the unmanned aerial vehicle are monitored timely and dynamically by providing the inertia sensor, and the start and stop of the motors are quickly and timely controlled so as to improve the shooting stability of the shooting assembly.

Preferably, on the basis of the above technical solution, structural improvement is made on the basis of the tri-axis platform 100 for use in an unmanned aerial vehicle to add a self-rotation function of the lens of the shooting assembly 1. It should be noted here that the shooting assembly 1 is not limited to the shape as shown in Fig.2 or Fig.3, and the shooting assembly 1 may also be in a shape of a revolving body or other shapes. During the flight of the small unmanned aerial vehicle, when the lens of the shooting assembly 1 rotates to a position perpendicular to a plane constituted by the X axis and Y axis, leftward or rightward rotation of the second bracket 4 about the Y axis can only drive the lens of the shooting assembly 1 to sweep within a certain range of the perpendicular plane and cannot achieve self-rotation of the lens of the shooting assembly 1. In order to allow for omni-directional adjustment of the angle of the lens when the lens rotates to be perpendicular to the plane constituted by the X axis and Y axis, the transmission assembly further comprises a fourth motor which directly drives the shooting assembly 1 to rotate about its own rotation axis K. When the K axis is parallel to or coaxial with the Y axis, the rotation of the second bracket 4 about the Y axis can achieve self-rotation of the lens of the shooting assembly 1; when the K axis is perpendicular to the Y axis, the lens of the shooting assembly 1 achieves self-rotation via the fourth motor.

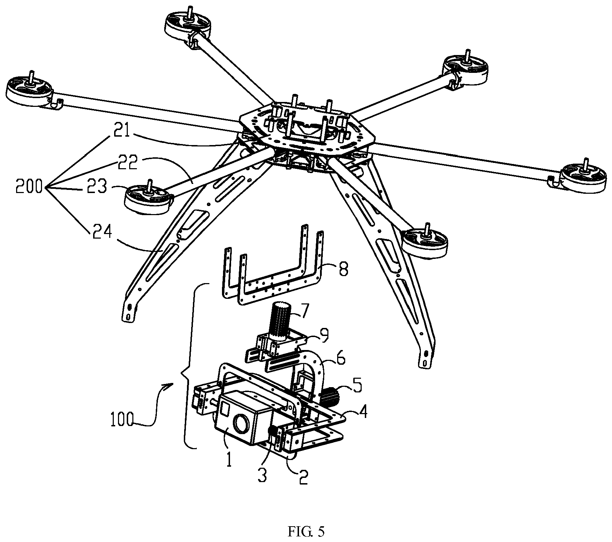

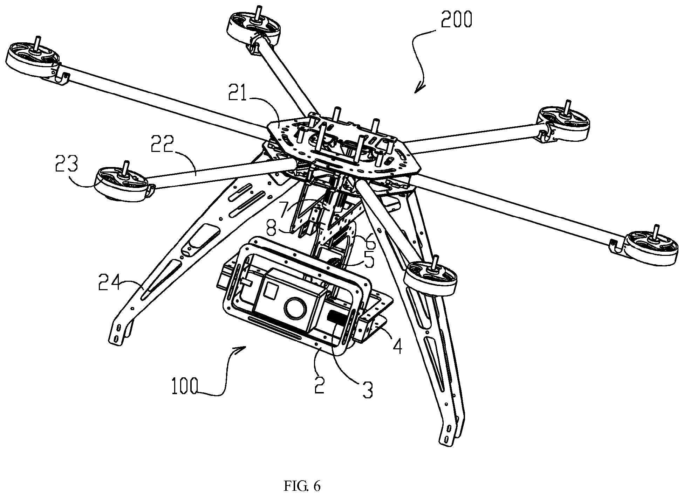

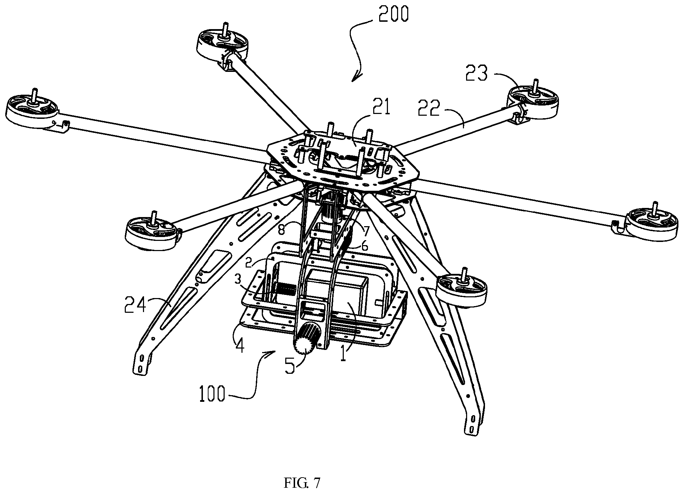

It should be noted here that, the dual-axis platform for use in a small unmanned aerial vehicle and the tri-axis platform 100 for use in a small unmanned aerial vehicle provided in example 1 and embodiment 2 may be mounted to a helicopter, or to a multi-rotor aerial vehicle, for example, an aerial vehicle with four blades, six blades or eight blades. Figs.5, 6 and 7 are structure diagrams of the tri-axis platform 100 for use in a small unmanned aerial vehicle being mounted to a multi-rotor aerial vehicle. The multi-rotor aerial vehicle comprises a multi-rotor mounting frame 200, an inertia measurement module, GPS and other elements. The multi-rotor mounting frame 200 comprises a base 21, a plurality of support arms 22 fixedly arranged and evenly distributed on the base 21, and rotor members 23 disposed on the support arms 22. The connecting frame 8 of the tri-axis platform 100 for use in a small unmanned aerial vehicle is fixed on the base 21 by screwing, riveting or welding, the positioning block 9 is fixed on the connecting frame 8 via a screw, and the stator of the third motor 7 is fixed on the positioning block 9. It is understood that the stator and rotor are interchangeable in position, which can also achieve the purpose of rotation.

Examples and embodiments of the present invention have been described above with reference to figures. However, the present invention is not limited to the above specific embodiments. The above specific embodiments are only illustrative rather than limiting. In the light of the present invention, those having ordinary skill in the art, without departure from the scope defined by the appended claims, may devise many forms, which all fall within the scope of the present invention.

## Claims

1. A platform for use in an unmanned aerial vehicle, comprising a machine frame assembly, and a transmission assembly, and a shooting assembly, wherein:
the machine frame assembly comprises a first bracket (2), a second bracket (4) a third bracket (6) and a connecting frame (8), wherein the first bracket (2) is configured to support a shooting assembly (1) affixed thereto, and wherein the first bracket (2) is rotatably arranged with the second bracket (4), the second bracket (4) is rotatably arranged with the third bracket (6), and the third bracket (6) is rotatably arranged with the connecting frame (8);
the transmission assembly comprises a first motor (3), a second motor (5), and a third motor (7), wherein the first motor (3) directly drives the first bracket (2) to rotate relative to the second bracket (4), the second motor (5) directly drives the second bracket (4) to rotate relative to the third bracket (6), and the third motor (7) directly drives the third bracket (6) to rotate relative to the connecting frame (8) wherein,
(a) the center of gravity of the first bracket (2), the second bracket (4) and the shooting assembly (1) as a whole falls on the rotation axis Y of the second bracket (4), or
(b) the center of gravity of the first bracket (2), the second bracket (4), the third bracket (6) and the shooting assembly (1) as a whole falls on a rotation axis Z of the third bracket (6),
**characterized in that**
the connecting frame (8) includes two U-shaped frames that are fixedly connected by a positioning block (9).

2. The platform for use in an unmanned aerial vehicle according to claim 1, wherein a rotation axis X of the first bracket (2) is arranged perpendicular to a rotation axis Y of the second bracket (4).

3. The platform for use in an unmanned aerial vehicle according to claim 1, wherein a stator of the first motor (3) is fixed on the first bracket (2), and a rotor of the first motor (3) is fixedly arranged with the second bracket (4);
or, the rotor of the first motor (3) is fixed on the first bracket (2) and the stator of the first motor (3) is fixedly arranged with the second bracket (4).

4. The platform for use in an unmanned aerial vehicle according to claim 1, wherein a stator of the second motor (5) is fixed on the third bracket (6), and a rotor of the second motor (5) is fixedly arranged with the second bracket (4);
or, the rotor of the second motor (5) is fixed on the third bracket (6) and the stator of the second motor (5) is fixedly arranged with the second bracket (4).

5. The platform for use in an unmanned aerial vehicle according to claim 1, wherein a stator of the third motor (7) is fixed on the connecting frame (8), and a rotor of the third motor (7) is fixedly connected to the third bracket (6);
or, the rotor of the third motor (7) is fixed on the connecting frame (8) and the stator of the third motor (7) is fixedly connected to the third bracket (6).

6. The platform for use in an unmanned aerial vehicle according to any of the previous claims, wherein the transmission assembly comprises a fourth motor which is configured to drive the shooting assembly (1) to rotate about its own rotation axis.

7. The platform for use in an unmanned aerial vehicle according to claim 1, wherein the first motor, second motor, or third motor is configured to achieve indefinitely variable adjustment and uniform speed change, and is capable of adjusting the magnitude of motor speed continuously.

8. The platform for use in an unmanned aerial vehicle according to claim 1, wherein the transmission assembly further comprises (A) an inertia sensor that monitors postures of the unmanned aerial vehicle timely and dynamically, and (B) a multiprocessor, wherein the multiprocessor controls positive rotation, reverse rotation and magnitude of rotation speed of the first motor and the second motor according to a signal from the inertia sensor.

9. The platform for use in an unmanned aerial vehicle according to claim 8, wherein the inertia sensor comprises a gyro for detecting an angular speed signal and an accelerometer for detecting an acceleration signal.

10. The platform for use in an unmanned aerial vehicle according to claim 1, wherein (i) the center of gravity of the first bracket (2) and the shooting assembly (1) falls on the rotation axis X of the first bracket (2), and (ii) the center of gravity of the first bracket (2), the second bracket (4) and the shooting assembly (1) as a whole falls on the rotation axis Y of the second bracket (4).

11. The platform for use in an unmanned aerial vehicle according to claim 1, wherein (i) the center of gravity of the first bracket (2) and the shooting assembly (1) falls on the rotation axis X of the first bracket (2), (ii) the center of gravity of the first bracket (2), the second bracket (4) and the shooting assembly (1) as a whole falls on the rotation axis Y of the second bracket (4), and (iii) the center of gravity of the first bracket (2), the second bracket (4), the third bracket (6) and the shooting assembly (1) as a whole falls on a rotation axis Z of the third bracket (6).

12. The platform for use in an unmanned aerial vehicle according to claim 6, wherein the first motor (3), the second motor (5), the third motor (7) and the fourth motor are each a DC brushless motor.

13. A multi-rotor aerial vehicle, comprising the platform (100) for use in an unmanned aerial vehicle according to any of claims 1-12, a multi-rotor mounting frame (200) and circuit elements, the multi-rotor mounting frame (200) comprises a base (21), a plurality of support arms (22) connected to the base (21), a rotor member (23) disposed on each support arm (22), and a plurality of support frames (24) which are arranged extending along the base (21) and used for positioning externally; the platform (1 00) for use in the unmanned aerial vehicle is fixed arranged at the base (2 1) through the connecting frame (8).

14. The multi-rotor aerial vehicle according to claim 13, wherein the platform (100) is located between the plurality of support frames (24).

15. The multi-rotor aerial vehicle according to claim 14, wherein the platform (100) is supported beneath the base (21) and above a distal end of each of the plurality of support frames (24).

## Patentansprüche

1. Plattform zur Verwendung in einem unbemannten Luftfahrzeug, die eine Maschinenrahmenanordnung und eine Übertragungsanordnung und eine Aufnahmeanordnung umfasst, wobei:
die Maschinenrahmenanordnung eine erste Halterung (2), eine zweite Halterung (4), eine dritte Halterung (6) und einen Verbindungsrahmen (8) umfasst, wobei die erste Halterung (2) dazu ausgelegt ist, eine Aufnahmeanordnung (1), die daran befestigt ist, zu stützen, und wobei die erste Halterung (2) drehbar an der zweiten Halterung (4) angeordnet ist, die zweite Halterung (4) drehbar an der dritten Halterung (6) angeordnet ist und die dritte Halterung (6) drehbar am Verbindungsrahmen (8) angeordnet ist;
die Übertragungsanordnung einen ersten Motor (3), einen zweiten Motor (5) und einen dritten Motor (7) umfasst, wobei der erste Motor (3) die erste Halterung (2) direkt antreibt, um sie relativ zur zweiten Halterung (4) zu drehen, der zweite Motor (5) die zweite Halterung (4) direkt antreibt, um sie relativ zur dritten Halterung (6) zu drehen und der dritte Motor (7) die dritte Halterung (6) direkt antreibt, um sie relativ zum Verbindungsrahmen (8) zu drehen, wobei
(a) der Schwerpunkt der ersten Halterung (2), der zweiten Halterung (4) und der Aufnahmeanordnung (1) als Ganzes auf der Drehachse Y der zweiten Halterung (4) liegt oder
(b) der Schwerpunkt der ersten Halterung (2), der zweiten Halterung (4), der dritten Halterung (6) und der Aufnahmeanordnung (1) als Ganzes auf einer Drehachse Z der dritten Halterung (6) liegt,
**dadurch gekennzeichnet, dass**
der Verbindungsrahmen (8) zwei U-förmige Rahmen beinhaltet, die durch einen Positionierungsblock (9) starr verbunden sind.

2. Plattform zur Verwendung in einem unbemannten Luftfahrzeug nach Anspruch 1, wobei eine Drehachse X der ersten Halterung (2) senkrecht zu einer Drehachse Y der zweiten Halterung (4) angeordnet ist.

3. Plattform zur Verwendung in einem unbemannten Luftfahrzeug nach Anspruch 1, wobei ein Stator des ersten Motors (3) an der ersten Halterung (2) befestigt ist und ein Rotor des ersten Motors (3) starr in der zweiten Halterung (4) angeordnet ist;
oder der Rotor des ersten Motors (3) an der ersten Halterung (2) befestigt ist und der Stator des ersten Motors (3) starr in der zweiten Halterung (4) angeordnet ist.

4. Plattform zur Verwendung in einem unbemannten Luftfahrzeug nach Anspruch 1, wobei ein Stator des zweiten Motors (5) an der dritten Halterung (6) befestigt ist und ein Rotor des zweiten Motors (5) starr in der zweiten Halterung (4) angeordnet ist;
oder der Rotor des zweiten Motors (5) an der dritten Halterung (6) befestigt ist und der Stator des zweiten Motors (5) starr in der zweiten Halterung (4) angeordnet ist.

5. Plattform zur Verwendung in einem unbemannten Luftfahrzeug nach Anspruch 1, wobei ein Stator des dritten Motors (7) am Verbindungsrahmen (8) befestigt ist und ein Rotor des dritten Motors (7) starr mit der dritten Halterung (6) verbunden ist;
oder der Rotor des dritten Motors (7) am Verbindungsrahmen (8) befestigt ist und ein Stator des dritten Motors (7) starr mit der dritten Halterung (6) verbunden ist.

6. Plattform zur Verwendung in einem unbemannten Luftfahrzeug nach einem der vorhergehenden Ansprüche, wobei die Übertragungsanordnung einen vierten Motor umfasst, der dazu ausgelegt ist, die Aufnahmeanordnung (1) um ihre eigene Drehachse zu drehen.

7. Plattform zur Verwendung in einem unbemannten Luftfahrzeug nach Anspruch 1, wobei der erste Motor, der zweite Motor oder der dritte Motor dazu ausgelegt ist, eine unbegrenzt variable Einstellung und eine gleichförmige Drehzahländerung zu erreichen, und in der Lage ist, die Größe der Motordrehzahl kontinuierlich einzustellen.

8. Plattform zur Verwendung in einem unbemannten Luftfahrzeug nach Anspruch 1, wobei die Übertragungsanordnung ferner (A) einen Trägheitssensor, der Lagen des unbemannten Luftfahrzeugs zeitmäßig und dynamisch überwacht, und (B) einen Multiprozessor umfasst, wobei der Multiprozessor eine positive Drehung, eine Rückwärtsdrehung und eine Größe einer Drehzahl des ersten Motors und des zweiten Motors gemäß einem Signal vom Trägheitssensor steuert.

9. Plattform zur Verwendung in einem unbemannten Luftfahrzeug nach Anspruch 8, wobei der Trägheitssensor einen Kreisel zum Detektieren eines Winkelgeschwindigkeitssignals und einen Beschleunigungsmesser zum Detektieren eines Beschleunigungssignals umfasst.

10. Plattform zur Verwendung in einem unbemannten Luftfahrzeug nach Anspruch 1, wobei (i) der Schwerpunkt der ersten Halterung (2) und der Aufnahmeanordnung (1) auf der Drehachse X der ersten Halterung (2) liegt und (ii) der Schwerpunkt der ersten Halterung (2), der zweiten Halterung (4) und der Aufnahmeanordnung (1) als Ganzes auf der Drehachse Y der zweiten Halterung (4) liegt.

11. Plattform zur Verwendung in einem unbemannten Luftfahrzeug nach Anspruch 1, wobei (i) der Schwerpunkt der ersten Halterung (2) und der Aufnahmeanordnung (1) auf der Drehachse X der ersten Halterung (2) liegt, (ii) der Schwerpunkt der ersten Halterung (2), der zweiten Halterung (4) und der Aufnahmeanordnung (1) als Ganzes auf der Drehachse Y der zweiten Halterung (4) liegt und (iii) der Schwerpunkt der ersten Halterung (2), der zweiten Halterung (4), der dritten Halterung (6) und der Aufnahmeanordnung (1) als Ganzes auf einer Drehachse Z der dritten Halterung (6) liegt.

12. Plattform zur Verwendung in einem unbemannten Luftfahrzeug nach Anspruch 6, wobei der erste Motor (3), der zweite Motor (5), der dritte Motor (7) und der vierte Motor jeweils ein bürstenloser DC-Motor sind.

13. Luftfahrzeug mit mehreren Rotoren, das die Plattform (100) zur Verwendung in einem unbemannten Luftfahrzeug nach einem der Ansprüche 1-12, einen Montagerahmen (200) für mehrere Rotoren und Schaltungselemente umfasst, wobei der Montagerahmen (200) für mehrere Rotoren eine Basis (21), eine Vielzahl von Stützarmen (22), die mit der Basis (21) verbunden sind, eine Rotorkomponente (23), die an jedem Stützarm (22) positioniert ist, und eine Vielzahl von Stützrahmen (24), die derart angeordnet sind, dass sie sich entlang der Basis (21) erstrecken, und für eine externe Positionierung verwendet werden, umfasst; wobei die Plattform (100) zur Verwendung im unbemannten Luftfahrzeug über den Verbindungsrahmen (8) fest an der Basis (21) angeordnet ist.

14. Luftfahrzeug mit mehreren Rotoren nach Anspruch 13, wobei die Plattform (100) zwischen der Vielzahl von Stützrahmen (24) positioniert ist.

15. Luftfahrzeug mit mehreren Rotoren nach Anspruch 14, wobei die Plattform (100) unter der Basis (21) und über einem distalen Ende von jedem der Vielzahl von Stützrahmen (24) gestützt wird.

## Revendications

1. Plateforme destinée à être utilisée dans un aéronef sans pilote, comprenant un ensemble de bâti de machine et un ensemble de transmission, et un ensemble de prise de vue, dans laquelle :
l'ensemble de bâti de machine comprend une première console (2), une deuxième console (4), une troisième console (6) et un bâti de raccordement (8), dans laquelle la première console (2) est configurée pour supporter un ensemble de prise de vue (1) fixé à cette dernière, et dans laquelle la première console (2) est agencée, en rotation, avec la deuxième console (4), la deuxième console (4) est agencée en rotation avec la troisième console (6), et la troisième console (6) est agencée en rotation avec le bâti de raccordement (8) ;
l'ensemble de transmission comprend un premier moteur (3), un deuxième moteur (5) et un troisième moteur (7), dans laquelle le premier moteur (3) entraîne directement la première console (2) à tourner par rapport à la deuxième console (4), le deuxième moteur (5) entraîne directement la deuxième console (4) à tourner par rapport à la troisième console (6) et le troisième moteur (7) entraîne directement la troisième console (6) à tourner par rapport au bâti de raccordement (8), dans laquelle :
(a) le centre de gravité de la première console (2), de la deuxième console (4) et de l'ensemble de prise de vue (1) dans son ensemble, tombe sur l'axe de rotation Y de la deuxième console (4), ou
(b) le centre de gravité de la première console (2), de la deuxième console (4), de la troisième console (6) et de l'ensemble de prise de vue (1) dans son ensemble tombe sur un axe de rotation Z de la troisième console (6),
**caractérisée en ce que** :
le bâti de raccordement (8) comprend deux bâtis en forme de U qui sont raccordés de manière fixe par un bloc de positionnement (9).

2. Plateforme destinée à être utilisée dans un aéronef sans pilote selon la revendication 1, dans laquelle un axe de rotation (X) de la première console (2) est agencé perpendiculairement à un axe de rotation Y de la deuxième console (4).

3. Plateforme destinée à être utilisée dans un aéronef sans pilote selon la revendication 1, dans laquelle un stator du premier moteur (3) est fixé sur la première console (2) et un rotor du premier moteur (3) est agencé, de manière fixe, avec la deuxième console (4) ;
ou bien le rotor du premier moteur (3) est fixé sur la première console (2) et le stator du premier moteur (3) est agencé, de manière fixe, avec la deuxième console (4).

4. Plateforme destinée à être utilisée dans un aéronef sans pilote selon la revendication 1, dans laquelle un stator du deuxième moteur (5) est fixé sur la troisième console (6) et un rotor du deuxième moteur (5) est agencé de manière fixe avec la deuxième console (4) ;
ou bien le rotor du deuxième moteur (5) est fixé sur la troisième console (6) et le stator du deuxième moteur (5) est agencé de manière fixe avec la deuxième console (4).

5. Plateforme destinée à être utilisée dans un aéronef sans pilote selon la revendication 1, dans laquelle un stator du troisième moteur (7) est fixé sur le bâti de raccordement (8) et un rotor du troisième moteur (7) est raccordé de manière fixe à la troisième console (6) ;
ou bien le rotor du troisième moteur (7) est fixé sur le bâti de raccordement (8) et le stator du troisième moteur (7) est raccordé de manière fixe à la troisième console (6).

6. Plateforme destinée à être utilisée dans un aéronef sans pilote selon l'une quelconque des revendications précédentes, dans laquelle l'ensemble de transmission comprend un quatrième moteur qui est configuré pour entraîner l'ensemble de prise de vue (1) à tourner autour de son propre axe de rotation.

7. Plateforme destinée à être utilisée dans un aéronef sans pilote selon la revendication 1, dans laquelle le premier moteur, le deuxième moteur ou le troisième moteur est configuré pour obtenir un ajustement indéfiniment variable et un changement de vitesse uniforme, et est capable d'ajuster la grandeur de la vitesse de moteur de manière continue.

8. Plateforme destinée à être utilisée dans un aéronef sans pilote selon la revendication 1, dans laquelle l'ensemble de transmission comprend en outre (A) un capteur d'inertie qui surveille les postures de l'aéronef sans pilote de manière temporelle et dynamique, et (B) un multiprocesseur, dans laquelle le multiprocesseur commande la rotation positive, la rotation inverse et la grandeur de la vitesse de rotation du premier moteur et du second moteur selon un signal provenant du capteur d'inertie.

9. Plateforme destinée à être utilisée dans un aéronef sans pilote selon la revendication 8, dans laquelle le capteur d'inertie comprend un gyroscope pour détecter un signal de vitesse angulaire et un accéléromètre pour détecter un signal d'accélération.

10. Plateforme destinée à être utilisée dans un aéronef sans pilote selon la revendication 1, dans laquelle (i) le centre de gravité de la première console (2) et de l'ensemble de prise de vue (1) tombe sur l'axe de rotation X de la première console (2), et (ii) le centre de gravité de la première console (2), de la deuxième console (4) et de l'ensemble de prise de vue (1) dans son ensemble tombe sur l'axe de rotation Y de la deuxième console (4).

11. Plateforme destinée à être utilisée dans un aéronef sans pilote selon la revendication 1, dans laquelle (i) le centre de gravité de la première console (2) et de l'ensemble de prise de vue (1) tombe sur l'axe de rotation X de la première console (2), (ii) le centre de gravité de la première console (2), de la deuxième console (4)et de l'ensemble de prise de vue (1) dans son ensemble tombe sur l'axe de rotation Y de la deuxième console (4), et (iii) le centre de gravité de la première console (2), de la deuxième console (4), de la troisième console (6) et de l'ensemble de prise de vue (1) dans son ensemble tombe sur un axe de rotation Z de la troisième console (6).

12. Plateforme destinée à être utilisée dans un aéronef sans pilote selon la revendication 6, dans laquelle le premier moteur (3), le deuxième moteur (5), le troisième moteur (7) et le quatrième moteur sont chacun un moteur sans balai à courant continu.

13. Aéronef à plusieurs rotors comprenant la plateforme (100) destinée à être utilisée dans un aéronef sans pilote selon l'une quelconque des revendications 1 à 12, un bâti de montage à plusieurs rotors (200) et des éléments de circuit, le bâti de montage à plusieurs rotors (200) comprend une base (21), une pluralité de bras de support (22) raccordés à la base (21), un élément de rotor (23) disposé sur chaque bras de support (22) et une pluralité de bâtis de support (24) qui sont agencés en s'étendant le long de la base (21) et utilisés pour le positionnement à l'extérieur ; la plateforme (100) destinée à être utilisée dans l'aéronef sans pilote est agencée de manière fixe sur la base (21) par le biais du bâti de raccordement (8).

14. Aéronef à plusieurs rotors selon la revendication 13, dans lequel la plateforme (100) est positionnée entre la pluralité de bâtis de support (24).

15. Aéronef à plusieurs rotors selon la revendication 14, dans lequel la plateforme (100) est supportée au-dessous de la base (21) et au-dessus d'une extrémité distale de chacun de la pluralité de bâtis de support (24).
